# FASCICULE DE BREVET EUROPEEN

(11) **EP 0 677 838 B1**
(45) Date de publication et mention de la délivrance du brevet: **06.09.2000**
(21) Numéro de dépôt: 95111116.0
(22) Date de dépôt: 21.04.1989
(51) Int. Cl.: G11B 5/49, G11B 5/17, G11B 15/12, G11B 5/31

(54) **Dispositif matriciel à têtes magnétiques notamment en couches minces**
Magnetkopf-Matrixanordnung, insbesondere aus Dünnschichten
Magnetic head matrix device, especially made of thin layers

(30) Priorité: 27.04.1988 FR 8805592
(43) Date de publication de la demande: 18.10.1995
(62) Demande divisionnaire de: 89401125.3
(73) Titulaire: THOMSON-CSF, 75008 Paris (FR)
(72) Inventeur: Lehureau, Jean-Claude, F-92402 Courbevoie Cedex (FR)
(74) Mandataire: Guérin, Michel

(56) Documents cités:
- EP-A- 0 097 836
- WO-A-87/00959
- GB-A- 1 197 266
- US-A- 3 309 681
- US-A- 3 483 538
- US-A- 3 492 663
- US-A- 3 662 361
- US-A- 3 881 192
- US-A- 3 947 831
- US-A- 4 303 956
- IBM TECHNICAL DISCLOSURE BULLETIN, vol. 15, no. 4, Septembre 1972 ARMONK, N.Y., US, page 1300 F. B. SHELLEDY 'Pulse write biasing'

## Description

L'invention est relative à un dispositif d'enregistrement magnétique à pluralité de têtes, notamment en couches minces.

Pour l'enregistrement et la lecture d'informations sur des supports magnétiques, notamment des bandes, on cherche de plus en plus à miniaturiser les têtes d'enregistrement de façon à augmenter la densité d'informations sur le support. Pour la miniaturisation on fait appel en général à des têtes en couches minces.

Une tête magnétique est constituée d'un circuit magnétique à entrefer associé à un bobinage auquel est appliqué le signal à enregistrer sur le support disposé au voisinage de l'entrefer. Ce signal appliqué au bobinage crée un champ magnétique qui sert à aimanter la petite zone du support qui se trouve au voisinage de l'entrefer.

On cherche également à associer plusieurs têtes magnétiques de façon à éviter les mouvements de la tête. Par exemple pour les bandes, en particulier pour magnétoscopes, on a intérêt à prévoir une ligne de têtes magnétiques, une par piste sur la bande. En outre l'association de plusieurs têtes permet d'augmenter la rapidité d'écriture d'informations sur le support.

EP-A-0 097 836 décrit des dispositifs à tête magnétiques possèdant les caractéristiques des préambules des revendications 1 et 3.

L'invention permet une réalisation particulièrement simple d'un ensemble de têtes magnétiques d'enregistrement.

Un dispositif selon un premier aspect de l'invention est défini à la revendication 1.

Un dispositif selon un second aspect de l'invention est défini à la revendication 3.

A chaque tête magnétique correspondent deux fils conducteurs, l'un de ligne et l'autre de colonne. Pour que cette tête magnétique inscrive une information sur le support la somme des intensités des courants traversant chacun des fils doit dépasser une valeur prédéterminée. A cet effet, l'intensité du courant dans chaque conducteur d'une tête inscrivant une information présente une première valeur alors que les têtes n'inscrivant pas d'information sont associées à au moins un conducteur parcouru par un courant dont l'intensité a une seconde valeur, inférieure en valeur absolue à la première. Autrement dit une information est inscrite seulement par les têtes magnétiques auxquelles correspondent des fils de ligne et de colonne parcourus simultanément par un courant d'intensité suffisante.

De préférence les têtes magnétiques sont du type en couches minces déposées sur un substrat de manière que le champ magnétique créé soit parallèle à la surface du substrat, l'entrefer constituant une couche perpendiculaire à cette surface. Pour fabriquer de telles têtes magnétiques on peut avoir recours à un procédé qui consiste à d'abord déposer sur le substrat un premier pôle puis à déposer la matière constituant l'entrefer, cette seconde couche ayant une épaisseur moins importante que la première et recouvrant une tranche d'extrémité de la première couche, puis on dépose au moins sur la couche d'entrefer une troisième couche en matériau magnétique constituant le second pôle. Enfin on polit ou décape ces couches minces de façon à dégager l'entrefer. Avec un tel procédé on peut obtenir un entrefer d'épaisseur très faible.

Pour fermer le circuit magnétique associé à chaque tête magnétique en couches minces, dans une réalisation on prévoit un autre substrat en matériau magnétique sur lequel est disposé le premier substrat par sa face opposée à celle sur laquelle sont déposés les pôles et l'entrefer, des pôles étant formés dans ce substrat en matériau magnétique aux emplacements correspondant aux pôles des têtes magnétiques. En variante les couches minces sont déposées directement sur le substrat magnétique qui est de préférence en forme de plaque.

Ce substrat magnétique présente par exemple des rainures dans lesquelles on dispose les fils de lignes et de colonnes.

D'autres caractéristiques et avantages de l'invention apparaîtront avec la description de certains de ses modes de réalisation, celle-ci étant effectuée en se référant aux dessins ci-annexés sur lesquels :
- la figure 1 est un schéma montrant les diverses parties d'un dispositif à têtes magnétiques selon un mode de réalisation de l'invention,
- la figure 2 est une coupe selon la ligne 2-2 de la figure 1,
- les figures 3ₐ à 3_{d} sont des schémas montrant un procédé de réalisation d'une tête magnétique du dispositif de la figure 1,
- la figure 4 est un schéma illustrant le fonctionnement du dispositif de la figure 1,

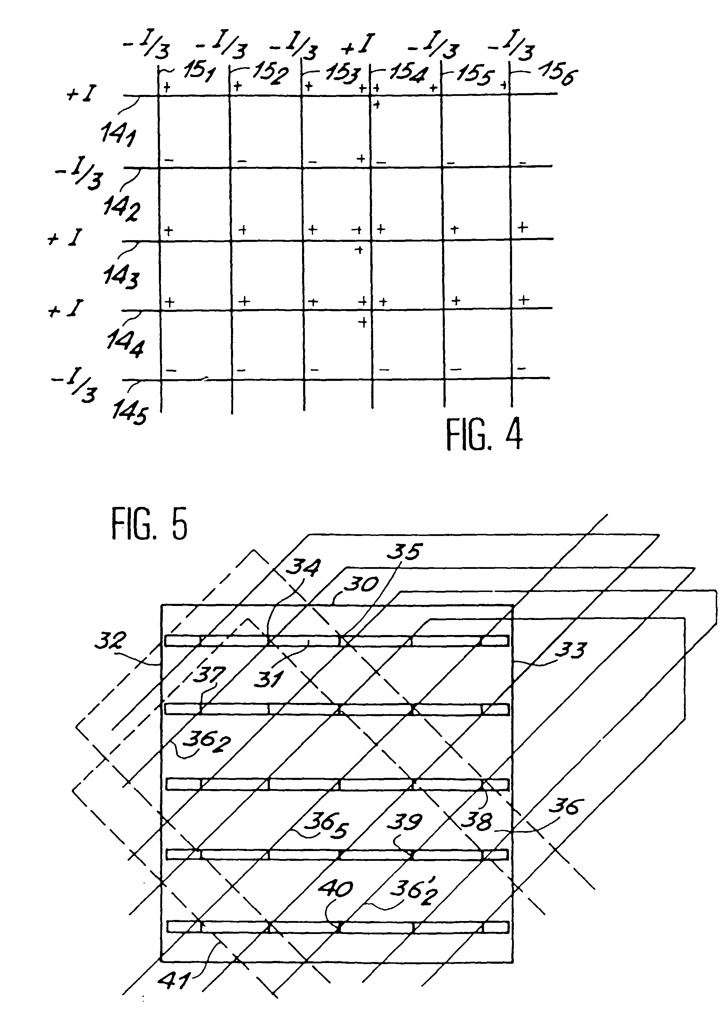

- la figure 4ₐ correspond à une variante de la figure 4 illustrant un autre mode de réalisation de l'invention,

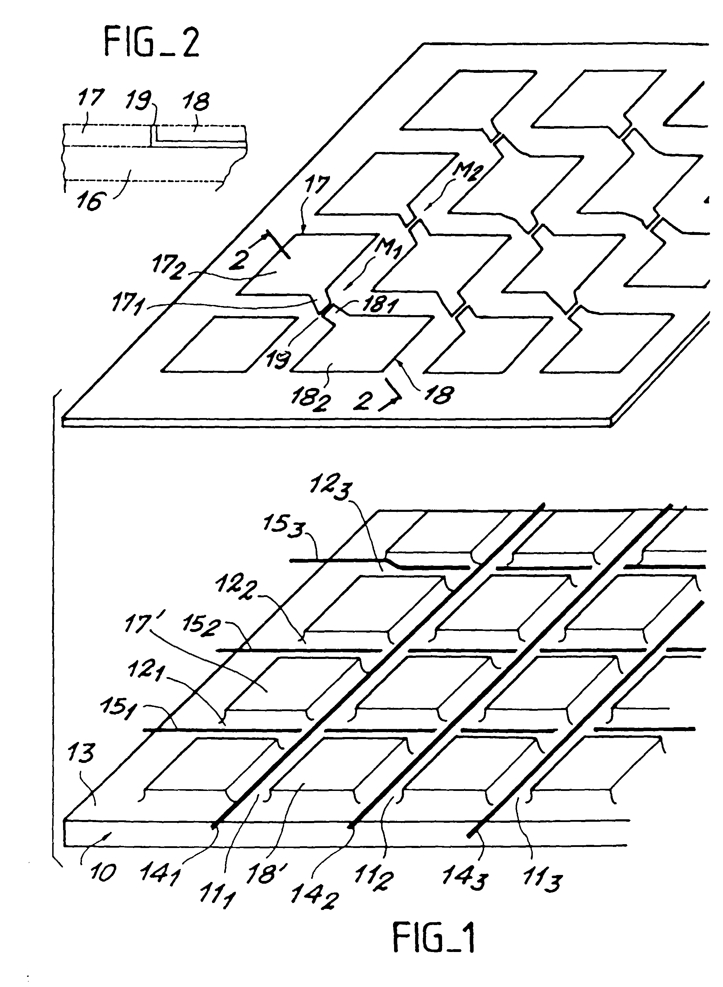

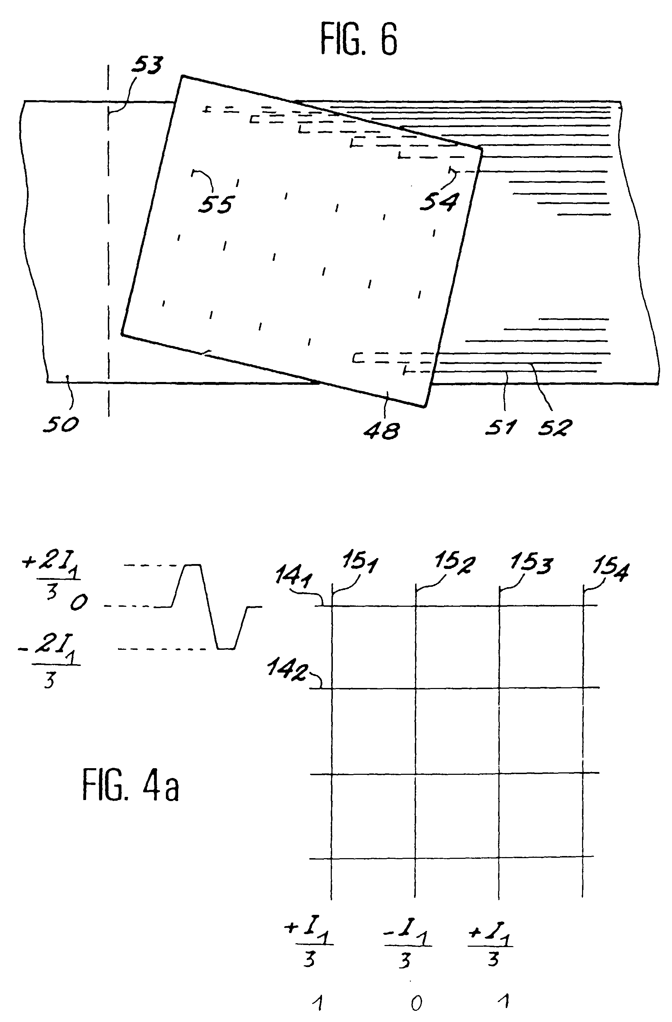

- la figure 5 est un schéma d'une variante d'un dispositif de la figure 1 illustrant un autre mode de réalisation de l'invention, et
- la figure 6 est un schéma illustrant l'utilisation du dispositif de la figure 1 ou de la figure 5.

Le dispositif à têtes magnétiques M₁, M₂... représenté sur les figures 1 et 2 comporte une plaque 10 en matière magnétique telle qu'une ferrite avec des rainures rectilignes 11₁, 11₂, 11₃... 12₁, 12₂, 12₃... sur l'une de ses faces 13. Les rainures 11₁, 11₂, 11₃... sont parallèles entre elles et forment des lignes tandis que les rainures 12₁, 12₂, 12₃... sont perpendiculaires aux lignes et forment des colonnes.

Dans chaque rainure est disposé un conducteur électrique 14₁, 14₂, 14₃..., 15₁, 15₂, 15₃... Le conducteur 14₁ est disposé dans la rainure 11₁, le conducteur 14₂ dans la rainure 11₂,..., le conducteur 15₁ se trouve dans la rainure 12₁, etc...

Sur la plaque 10 en matériau magnétique est collée une autre plaque 16 en matériau amagnétique sur la face libre 16₁ de laquelle sont formées les pièces polaires 17, 18 et l'entrefer 19 d'une série de têtes magnétiques dont le nombre est égal au nombre d'intersections entre les conducteurs de lignes et les conducteurs de colonnes. La disposition est telle que chaque entrefer 19 se trouve sous l'intersection d'un conducteur de ligne et d'un conducteur de colonne. Ainsi, sur la figure 1, l'entrefer 19 couvre l'intersection des conducteurs 14₁ et 15₁. De plus chaque pièce polaire 17, 18 couvre un pavé 17', 18' de la plaque 10. Par "pavé" on entend un élément en relief de la surface 13 qui est délimité par des rainures. On précise aussi que les conducteurs 14 et 15 ne sont pas sécants mais que par "intersection" on entend le point de chacun de ces conducteurs qui a une même projection sur le plan de la plaque 10.

Les pièces polaires 17 et 18, et donc les pavés 17' et 18', se trouvent de part et d'autre du conducteur 14₁ (ou de la rainure 11₁) ainsi que de part et d'autre du conducteur 15₁ (ou de la rainure 12₁). Ainsi les pièces polaires 17 et 18 ont une partie 17₂, 18₂ de plus grande surface de forme carrée ou rectangulaire couvrant le pavé correspondant 17', 18' ainsi qu'une extension 17₁, 18₁ de l'un des coins du rectangle au voisinage de l'intersection des conducteurs 14₁ et 15₁. L'entrefer 19 se trouve entre ces extensions 17₁ et 18₁. La direction générale de ces extensions correspond à une diagonale, c'est-à-dire environ 45° par rapport aux lignes et aux colonnes.

La direction générale de la fente de l'entrefer 19 est par exemple parallèle aux conducteurs 14₁. Dans une variante des entrefers sont inclinés d'un petit angle par rapport à cette direction, alors que d'autres entrefers en quinconce sont inclinés en sens inverse. De cette manière les informations inscrites sur des pistes voisines peuvent se distinguer par l'inclinaison de l'aimantation ce qui limite le risque de diaphonie lors de la lecture.

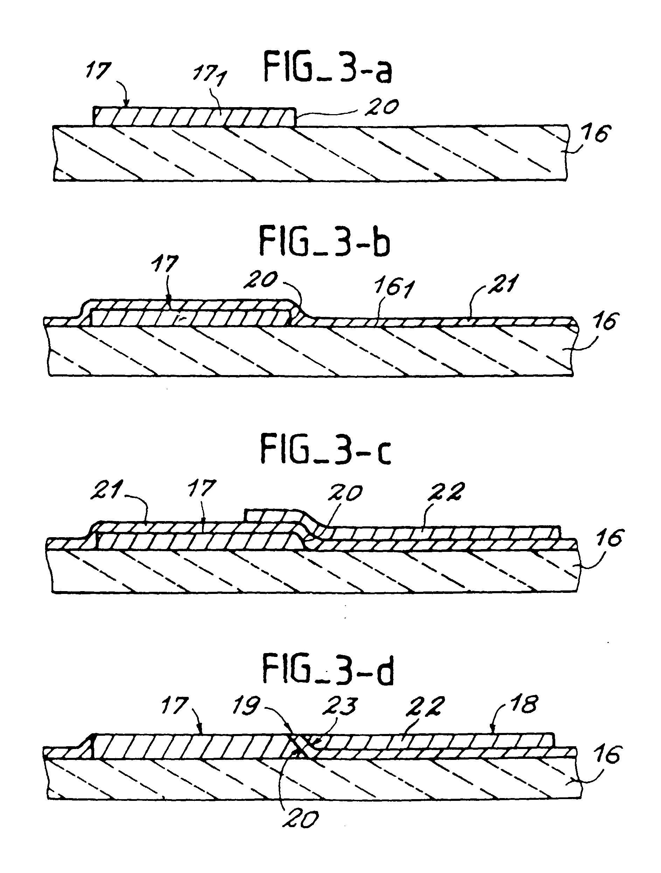

Pour réaliser en couches minces l'entrefer 19 ainsi que les pôles 17 et 18 on procède comme représenté sur les figures 3ₐ, 3_{b}, 3_{c} et 3_{d} :

On forme d'abord la pièce polaire 17 sur la plaque amagnétique 16. Sur la figure 3ₐ le flanc 20 perpendiculaire à la surface 16₁ constitue l'extrémité de la partie 17₁ de cette pièce 17, c'est-à-dire une des faces de l'entrefer. Le dépôt de la pièce 17 s'effectue par exemple par photogravure.

Ensuite (figure 3_{b}) on dépose une couche amagnétique 21 d'épaisseur inférieure à celle de la couche 17 et qui couvre à la fois la surface 16₁ de la plaque 16 et la couche 17 ainsi que son flanc 20.

Sur la partie de la couche 21 qui est adjacente au flanc 20 de la couche magnétique 17 on dépose une autre couche magnétique 22 (figure 3_{c}).

Enfin (figure 3_{d}) on polit l'ensemble des couches ainsi formées de façon à dégager la pièce 17. On voit donc qu'on forme de cette manière la pièce polaire 18 et l'entrefer 19 entre le flanc 20 de la pièce 17 et le flanc 23 de la pièce polaire 18.

Ce procédé, déjà décrit dans le brevet français n° 86 14974 au nom de la demanderesse, permet de réaliser de façon particulièrement simple une tête magnétique en couches minces tout en contrôlant convenablement l'épaisseur de l'entrefer 19. Il est vrai que la couche amagnétique 21 qui reste entre la plaque 16 et la pièce polaire 18 constitue un obstacle à la fermeture du circuit magnétique; mais dans la pratique on a constaté que la présence de cette couche 21 n'altérait pratiquement pas les performances de la tête.

Le circuit magnétique de chaque tête est fermé par la plaque de ferrite 10.

En variante (non représentée) après l'installation des fils 14, 15 dans les rainures correspondantes, on remplit ces rainures d'une résine ou d'une autre matière fusible ou thermodurcissable, puis on polit la face ainsi formée et on dépose directement sur cette face polie les pièces polaires 17, 18 et l'entrefer 19 aux emplacements des pavés 17', 18'. Le dépôt peut s'effectuer par exemple par le procédé décrit ci-dessus en relation avec les figures 3ₐ à 3_{d}. Avec cette technique on se passe du substrat 16 amagnétique, ce qui peut améliorer les performances.

Le dispositif de tête magnétique ainsi décrit permet d'inscrire une série d'informations de type numérique sur un support magnétique, par exemple une bande. Une information binaire de 1 (ou de 0) est inscrite sur la bande soit par une aimantation de sens déterminé et de valeur dépassant un seuil, soit par la transition entre deux aimantations de sens opposés et de valeurs supérieures à un seuil.

Pour inscrire un tel chiffre binaire avec une tête de position nm, c'est-à-dire qui se trouve sur la ligne de rang n et la colonne de rang m, on injecte un courant d'intensité I sur le conducteur de ligne de rang n et sur le conducteur de colonne de rang m. Par contre dans les autres conducteurs on injecte des courants d'intensité - I/3.

L'intensité I crée un champ magnétique de valeur insuffisante pour inscrire le chiffre binaire sur la bande. Par contre les champs magnétiques créés par les deux conducteurs parcourus par un courant I engendrent un champ magnétique suffisant pour inscrire un chiffre binaire.

Le champ créé par le courant d'intensité - I/3 sur les lignes et colonnes non adressées réduit les champs parasites. En effet en un point (normalement non adressé) qui correspond à un conducteur de ligne (ou colonne) parcouru par un courant I et un conducteur de colonne (ou ligne) parcouru par un courant - I/3 le champ magnétique créé est équivalent à celui engendré par un courant I - I/3 = 2I/3 . Le champ parasite nécessairement créé est ainsi diminué.

On a d'ailleurs constaté expérimentalement que des champs parasites qui sont de l'ordre de grandeur du tiers du champ d'écriture n'affectent le signal de lecture que dans une proportion acceptable (de 10 à 20%). Si sur les lignes ou colonnes non adressées l'intensité du courant était nulle on obtiendrait alors à l'intersection d'une ligne non adressée et d'une colonne adressée (ou l'inverse) une aimantation correspondant à un courant I, ce qui rendrait la lecture encore plus difficile. Si dans les conducteurs de lignes ou colonnes non adressées on faisait circuler un courant de polarité opposée mais de valeur absolue plus importante, par exemple - I/2, on obtiendrait alors à l'intersection des lignes et colonnes non adressées une aimantation correspondant à un courant - I, ce qui produirait un signal parasite pour l'aimantation de polarité opposée.

Dans l'exemple de la figure 4 on dispose de cinq fils de lignes, 14₁ à 14₅, et de six fils de colonnes, 15₁ à 15₆, soit en tout trente têtes magnétiques. Dans cet exemple les lignes 14₁, 14₃ et 14₄ et la colonne 15₄ sont adressées, c'est-à-dire que ces conducteurs sont parcourus par un courant d'intensité I alors que les autres sont parcourus par un courant d'intensité - I/3. Ainsi on inscrit trois points : ceux qui se trouvent à l'intersection de la colonne 15₄ et des lignes 14₁, 14₃et 14₄.

Selon une variante (figure 4ₐ) sur chaque ligne on applique successivement deux impulsions de courant de sens contraires, d'abord une impulsion positive d'intensité 2I₁/3 ensuite une impulsion négative d'intensité -2I₁/3. Sur les conducteurs de colonnes on applique des intensités constantes I₁/3 si on veut inscrire un chiffre "1" binaire, ou -I₁/3 si on veut inscrire un "0" binaire.

A l'intersection des conducteurs 14₁ et 15₁ quand apparaît l'impulsion 2I₁/3 son effet s'ajoute à celui du courant I₁/3 sur le conducteur 15₁ pour aimanter le support magnétique avec un champ correspondant au courant I₁ de valeur suffisante pour inscrire un "1". Par contre ensuite lors de l'impulsion négative -2I₁/3 l'aimantation correspond au courant -I₁/3 qui engendre un champ insuffisant pour effacer l'information déjà inscrite.

A l'intersection du conducteur 14₁ et du conducteur 15₂ de la figure 4ₐ lors de l'apparition de l'impulsion positive, l'aimantation correspond à un courant d'intensité I₁/3 insuffisante pour inscrire ou effacer une information. Quand survient l'impulsion négative -2I₁/3 l'aimantation est équivalente à celle produite par un courant -I₁, ce qui permet l'inscription d'un "0".

Il est à noter que dans cette réalisation, contrairement à ce qui a été décrit en relation avec la figure 4, une information est inscrite sur tous les points de chaque ligne.

De façon générale dans ce mode de réalisation la somme des courants de lignes et de colonnes est, à l'apparition de l'impulsion de même signe que le courant sur la colonne associée, suffisante pour inscrire une information; lors de l'impulsion de sens contraire la somme des courants est insuffisante pour inscrire ou effacer une information. Des résultats favorables sont obtenus quand la valeur absolue d'une alternance de l'intensité bipolaire est égale au double de la valeur absolue de l'intensité constante dans une colonne.

Dans la variante représentée sur la figure 5 le dispositif à têtes magnétiques a également la forme générale d'un rectangle. Il se distingue cependant de celui représenté sur la figure 1 par le fait que les pièces polaires d'une tête ne sont pas selon la direction d'une diagonale mais selon la direction d'un côté 30 du rectangle.

Ainsi les pièces polaires forment de simples bandes allongées parallèlement au côté 30. Les pièces polaires, par exemple celle de référence 31 sur la figure 5, qui ne sont pas aux extrémités (près des bords 32 et 33 perpendiculaires au bord 30) sont communes à deux têtes magnétiques. On voit en particulier que la pièce 31 est bordée par deux entrefers 34 et 35.

Dans la plaque de ferrite 36 les rainures qui reçoivent les conducteurs d'inscription de signaux sont de direction diagonale.

Pour obtenir un adressage et une excitation matriciels analogues à ceux de la figure 4, chaque conducteur présente deux parties en série. Par exemple le conducteur 36₂ présente une première partie rectiligne associée à l'entrefer 37 sur la seconde ligne, et à l'entrefer 34 sur la première ligne, ainsi qu'une seconde partie 36₂', en série avec la première partie, associée à des entrefers 38, 39 et 40 sur les troisième, quatrième et cinquième lignes. Seul un conducteur de diagonale 36₅ ne présente qu'une seule partie. Tous les conducteurs de lignes (en deux parties ou une seule partie) rencontrent le même nombre de têtes.

De même la plupart des conducteurs de colonnes qui sont selon l'autre diagonale présentent deux parties en série; ils rencontrent tous le même nombre de têtes. Ces conducteurs 41 ont été représentés en traits interrompus sur la figure 5.

Pour le reste la réalisation est la même que dans le cas de la figure 1.

On a représenté sur la figure 6 un dispositif à têtes magnétiques du type de celui décrit en relation avec la figure 1 ou la figure 5 inscrivant simultanément sur une bande magnétique un nombre de pistes 51, 52, etc... égal au nombre de têtes magnétiques dans le dispositif 48.

Pour permettre que l'écartement entre les pistes soit constant, les entrefers des diverses têtes sur une même ligne sont séparés par une distance constante et la projection, sur la direction 53 transversale de la bande 50, de la distance séparant le dernier entrefer 54 d'une ligne du premier entrefer 55 de la ligne suivante est égale à la projection, sur cette même direction 53, de la distance séparant deux entrefers voisins sur une même ligne.

On voit qu'avec la disposition de la figure 6 on peut inscrire un grand nombre de lignes sur une bande magnétique 50 sans une densité trop importante de têtes magnétiques dans le dispositif 48.

Pour la lecture des informations inscrites par le dispositif à têtes magnétiques on peut soit faire appel à ce même dispositif, soit utiliser tout autre dispositif de lecture, notamment de type magnéto-optique. Un dispositif particulièrement approprié est par exemple celui décrit dans le brevet français 84 08252 dans lequel on prévoit une source lumineuse telle qu'un laser, un transducteur magnéto-optique comportant une couche d'un matériau ferrimagnétique aimanté par la bande lorsqu'elle passe à proximité de ce matériau et une couche réfléchissante sur ce matériau à proximité de la bande. Le faisceau lumineux traverse la matériau ferrimagnétique qui est réfléchi par la couche réfléchissante. De cette manière la direction de polarisation du faisceau subit une rotation dans un sens dépendant de l'aimantation de la zone observée, et la réflexion permet de doubler l'angle de rotation.

## Revendications

1. Dispositif à têtes magnétiques (M₁, M₂ ...) pour l'inscription d'informations sur un support magnétique (50), dans lequel les têtes (M₁, M₂ ...) sont disposées sous forme d'un réseau matriciel et, pour l'excitation de chaque tête, on prévoit un réseau de fils conducteurs (14, 15) associés au réseau matriciel, caractérisé en ce que le dispositif comprend des moyens d'adressage prévus pour que l'intensité du courant électrique dans chacun desdits conducteurs associé à une desdites têtes inscrivant une information sur le support (50) présente une première valeur et pour que chacune desdites têtes ne devant pas inscrire d'information ait au moins un desdits conducteurs qui lui est associé qui soit parcouru par un courant d'une intensité ayant une seconde valeur déterminée non nulle inférieure en valeur absolue à la première valeur.

2. Dispositif selon la revendication 1, caractérisé en ce que la seconde valeur est d'environ le tiers de la première et en ce que le sens du courant électrique ayant l'intensité de la seconde valeur est tel qu'il engendre un champ magnétique s'opposant au champ créé par les conducteurs parcourus par l'intensité de la première valeur.

3. Dispositif à têtes magnétiques (M₁, M₂ ...) pour l'inscription d'informations sur un support magnétique (50), dans lequel les têtes (M₁, M₂ ...) sont disposées sous forme d'un réseau matriciel et, pour l'excitation de chaque tête, on prévoit un réseau de fils conducteurs (14, 15) associés au réseau matriciel, caractérisé en ce que le dispositif comprend des moyens pour faire parcourir un desdits conducteurs associé à une desdites têtes inscrivant une information binaire sur le support (50) par deux impulsions successives de polarités opposées et pour faire parcourir l'autre desdits conducteurs associé à ladite tête par un courant d'intensité constante, la somme de cette intensité constante et de l'intensité de l'impulsion de même signe que ce courant constant étant suffisante pour inscrire une information tandis que la somme de l'intensité constante et de l'impulsion de polarité opposée est insuffisante pour inscrire ou effacer une information, le signe de l'intensité constante dépendant de la valeur de l'information binaire à inscrire.

4. Dispositif selon la revendication 3, caractérisé en ce que l'intensité du courant constant est environ la moitié de l'intensité d'une impulsion dans un sens.

5. Dispositif selon l'une quelconque des revendications précédentes, caractérisé en ce que le réseau matriciel est plan.

6. Dispositif selon l'une quelconque des revendications précédentes, caractérisé en ce que les fils conducteurs (14, 15) sont rectilignes.

7. Dispositif selon l'une quelconque des revendications précédentes, caractérisé en ce que les fils conducteurs sont non bobinés.

8. Dispositif selon l'une quelconque des revendications précédentes, caractérisé en ce qu'en projection sur une direction déterminée (53) la distance entre têtes voisines d'une même ligne est constante et est égale à la distance séparant la dernière tête (54) d'une ligne de la première tête (55) de la ligne suivante.

9. Dispositif selon l'une quelconque des revendications précédentes, caractérisé en ce que tous les fils de ligne sont associés à un même nombre de têtes magnétiques.

10. Dispositif selon l'une quelconque des revendications précédentes, caractérisé en ce que tous les fils de colonne sont associés à un même nombre de têtes magnétiques.

11. Dispositif selon la revendication 9 ou 10, caractérisé en ce qu'au moins certains des fils de lignes ou de colonnes présentent deux parties parallèles, les nombres de têtes surplombées par chacune des parties étant inégaux.

12. Dispositif à têtes magnétiques selon l'une des revendications précédentes, caractérisé en ce que les têtes magnétiques sont en couches minces et en ce que l'entrefer (19) de chaque tête forme un rebord d'une couche (21) disposée sous l'une des couches (22) formant une pièce polaire (18).

## Patentansprüche

1. Vorrichtung mit Magnetköpfen (M₁, M₂, ...) zum Schreiben von Informationen in einen magnetischen Träger (50), wobei in der Vorrichtung die Köpfe (M₁, M₂, ...) in Form eines Matrixgitters angeordnet sind und wobei für die Erregung jedes Kopfes ein Gitter aus Leiterdrähten (14, 15), die dem Matrixgitter zugeordnet sind, vorgesehen ist, dadurch gekennzeichnet, daß die Vorrichtung Adressierungsmittel umfaßt, die vorgesehen sind, damit die Stärke des elektrischen Stroms in jedem der Leiter, der einem der Köpfe zugeordnet ist, die in den Träger (50) eine Information schreiben, einen ersten Wert aufweist und damit jeder der Köpfe, der keine Information schreiben soll, wenigstens einen ihm zugeordneten Leiter aufweist, der von einem Strom mit einer Stärke, die einen zweiten, von null verschiedenen, bestimmten Wert besitzt, der dem Absolutwert nach kleiner als der erste Wert ist, durchflossen wird.

2. Vorrichtung nach Anspruch 1, dadurch gekennzeichnet, daß der zweite Wert ungefähr ein Drittel des ersten beträgt und daß der Richtungssinn des elektrischen Stroms, der die Stärke mit dem zweiten Wert hat, derart ist, daß er ein Magnetfeld erzeugt, das dem Feld entgegengesetzt ist, das durch die Leiter erzeugt wird, die von der Stärke des ersten Wertes durchflossen werden.

3. Vorrichtung mit Magnetköpfen (M₁, M₂, ...) zum Schreiben von Informationen in einen magnetischen Träger (50), wobei in der Vorrichtung die Köpfe (M₁, M₂, ...) in Form eines Matrixgitters angeordnet sind und wobei für die Erregung jedes Kopfes ein Gitter aus Leiterdrähten (14, 15), die dem Matrixgitter zugeordnet sind, vorgesehen ist, dadurch gekennzeichnet, daß die Vorrichtung Mittel umfaßt, die bewirken, daß durch einen der Leiter, der einem der Köpfe zugeordnet ist, der eine binäre Information in den Träger (50) schreibt, zwei aufeinanderfolgende Impulse mit entgegengesetzten Polaritäten laufen, und die bewirken, daß durch den anderen der Leiter, der dem Kopf zugeordnet ist, ein Strom mit konstanter Stärke fließt, wobei die Summe aus dieser konstanten Stärke und der Stärke des Impulses mit gleichem Vorzeichen wie der konstante Strom ausreicht, um eine Information zu schreiben, während die Summe aus der konstanten Stärke und aus dem Impuls mit entgegengesetzter Polarität nicht ausreicht, um eine Information zu schreiben oder zu löschen, wobei das Vorzeichen der konstanten Stärke vom Wert der zu schreibenden binären Information abhängt.

4. Vorrichtung nach Anspruch 3, dadurch gekennzeichnet, daß die konstante Stromstärke ungefähr gleich der halben Stärke eines Impulses in einer Richtung ist.

5. Vorrichtung nach einem der vorhergehenden Ansprüche, dadurch gekennzeichnet, daß das Matrixgitter eben ist.

6. Vorrichtung nach einem der vorhergehenden Ansprüche, dadurch gekennzeichnet, daß die Leiterdrähte (14, 15) geradlinig sind.

7. Vorrichtung nach einem der vorhergehenden Ansprüche, dadurch gekennzeichnet, daß die Leiterdrähte nicht gewickelt sind.

8. Vorrichtung nach einem der vorhergehenden Ansprüche, dadurch gekennzeichnet, daß in der Projektion auf eine bestimmte Richtung (53) der Abstand zwischen benachbarten Köpfen derselben Zeile konstant und gleich der Strecke ist, die den letzten Kopf (54) einer Zeile vom ersten Kopf (55) der folgenden Zeile trennt.

9. Vorrichtung nach einem der vorhergehenden Ansprüche, dadurch gekennzeichnet, daß sämtliche Drähte einer Zeile derselben Anzahl von Magnetköpfen zugeordnet sind.

10. Vorrichtung nach einem der vorhergehenden Ansprüche, dadurch gekennzeichnet, daß sämtliche Drähte einer Spalte derselben Anzahl von Magnetköpfen zugeordnet sind.

11. Vorrichtung nach Anspruch 9 oder 10, dadurch gekennzeichnet, daß wenigstens bestimmte der Zeilen- oder Spaltendrähte zwei parallele Teile aufweisen, wobei die jeweilige Anzahl von von jedem der Teile überstehenden Köpfen unterschiedlich ist.

12. Vorrichtung mit Magnetköpfen nach einem der vorhergehenden Ansprüche, dadurch gekennzeichnet, daß die Magnetköpfe aus Dünnschichten gebildet sind und daß der Luftspalt (19) jedes Kopfes einen Rand einer Schicht (21) bildet, die unter einer der Schichten (22), die ein Polteil (18) bilden, angeordnet ist.

## Claims

1. Device with magnetic heads (M₁, M₂, etc.) for writing information onto a magnetic medium (50), in which the heads (M₁, M₂, etc.) are arranged in the form of a matrix array and, for the excitation of each head, an array of conducting wires (14, 15) associated with the matrix array is provided, characterized in that the device includes addressing means provided in order for the intensity of the electric current in each of the said conductors associated with one of the said heads writing an item of information onto the medium (50) to have a first value and in order for each of the said heads not having to write information to have, flowing through at least one of the said conductors which is associated with it, a current whose intensity has a second, non-zero defined value smaller in absolute value than the first value.

2. Device according to Claim 1, characterized in that the second value is approximately one third of the first and in that the direction of the electric current whose intensity has the second value is such that it generates a magnetic field which opposes the field created by the conductors through which the current with the first value flows.

3. Device with magnetic heads (M₁, M₂, etc.) for writing information onto a magnetic medium (50), in which the heads (M₁, M₂, etc.) are arranged in the form of a matrix array and, for the excitation of each head, an array of conducting wires (14, 15) associated with the matrix array is provided, characterized in that the device includes means for sending two successive pulses of opposite polarities through one of the said conductors which is associated with one of the said heads writing an item of binary information onto the medium (50) and for making a current of constant intensity flow through the other of the said conductors which is associated with the said head, the sum of this constant intensity and of the intensity of the pulse of the same sign as this constant current being sufficient to write an item of information while the sum of the constant intensity and of the pulse of opposite polarity is insufficient to write or erase an item of information, the sign of the constant intensity depending on the value of the item of binary information to be written.

4. Device according to Claim 3, characterized in that the intensity of the constant current is approximately one half of the intensity of a pulse in one direction.

5. Device according to any one of the preceding claims, characterized in that the matrix array is planar.

6. Device according to any one of the preceding claims, characterized in that the conducting wires (14, 15) are straight.

7. Device according to any one of the preceding claims, characterized in that the conducting wires are not coiled.

8. Device according to any one of the preceding claims, characterized in that, in projection along a defined direction (53), the distance between adjacent heads in the same row is constant and is equal to the distance separating the last head (54) of one row from the first head (55) of the next row.

9. Device according to any one of the preceding claims, characterized in that all the row wires are associated with one and the same number of magnetic heads.

10. Device according to any one of the preceding claims, characterized in that all the column wires are associated with one and the same number of magnetic heads.

11. Device according to Claim 9 or 10, characterized in that at least some of the row or column wires have two parallel parts, the numbers of heads overhung by each of the parts being unequal.

12. Device with magnetic heads according to one of the preceding claims, characterized in that the magnetic heads are thin-film magnetic heads and in that the gap (19) of each head forms a rim of a layer (21) lying beneath one of the layers (22) forming a pole piece (18).
